# EUROPEAN PATENT SPECIFICATION

(11) **EP 3 184 405 B1**
(45) Date of publication and mention of the grant of the patent: **07.11.2018**
(21) Application number: 15460134.8
(22) Date of filing: 22.12.2015
(51) Int. Cl.: B62D 53/06

(54) **LOW BED SEMI-TRAILER**
SATTELTIEFLADEANHÄNGER
SEMI-REMORQUE SURBAISSÉE

(43) Date of publication of application: 28.06.2017
(73) Proprietor: Demarko Komarec Spolka Jawna, 41-605 Swietochlowice (PL)
(72) Inventor: Komarec, Mateusz, PL 41-605 Swietochlowice (PL)
(74) Representative: Klassek, Maciej Adam

(56) References cited:
- EP-A1- 0 162 552
- EP-A1- 1 577 159
- EP-A2- 2 772 418

## Description

The invention relates to a low bed semi-trailer, particularly for transporting exceptionally wide loads. This invention relates in particular to a low bed multiaxial semi-trailer for transporting loads and machines of large width and length.

There is known from Polish Patent PL214724 B1 a structure of a trailer or a semi-trailer, particularly for transporting pipe sections, provided with a frame with wheel sets and a floor. In the floor area the trailer has at least one pair of tiltable sections with rotation axes parallel to each other which, on one side, support the tiltable floor sections while on the other they rest on the frame and/or strengthening elements of the frame and/or the trailer's floor. Floor sections tiltable upwards in a given tilted position create cargo space where objects with circular section are placed for transport.

There is also known from Polish patent PL216578 B1 a semi-trailer having a extendible part comprising a gooseneck for connection with a fifth wheel of a tractor, and a multiaxial semi-trailer for transporting long rail-vehicles, with the slidable part pinned to the semi-trailer comprising axles provided with wheels and rails mounted in an adjustable manner in at least two standard gauges over the entire length of the surface of the upper extendible part and the trailer part. Rails on the slidable part are mounted on both its sides on rotatable supports facilitating free retracting of the retractable part to the semi-trailer part; whereas in the gooseneck part comprising a disk turntable, a freely adjustable arm is used from the center of rotation of the disk turntable. While loading a rail-vehicle on a semi-trailer, the extendible part is disconnected from the gooseneck and the rail-vehicle is pulled up from the side of the extendible part after it has been tilted downwards and thus connected with a short folding ramp, with the trailer part also tilted in the direction of the extendible part, using the possibility to adjust the trailer's axis, and the pulling up of a rail vehicle is achieved in track line by means of a rope attached on one side to the rail vehicle and on the other to a winch located at the rear of the trailer. At the rear of the semi-trailer part there is a limiter (36) mounted thereto.

There is known from a Canadian patent application CA2887826 (A1) an extension for a vehicle having a frame rail and a cross member with a top flange and a bottom flange, with the cross member connected to the frame rail. The extension includes a top bracket having a vertical portion and a top horizontal member, where the top bracket vertical portion has a leading end portion and a trailing end portion. The trailing end portion is adapted to be attached to the frame rail and the top horizontal member is adapted to engage the cross member top flange. An outer plate is attached to the leading end portion of the vertical portion of the top bracket and has a middle horizontal member. A spacer block is positioned between and attached to the top and middle horizontal members. A bottom bracket has a vertical portion and a bottom horizontal member. The bottom bracket vertical portion is attached to the outer plate and the bottom horizontal member is adapted to be attached to the bottom flange of the cross member.

There is known from an American patent application US2015284041 (A1) a transport vehicle with variable width and track width, and variable width of at least one radial axle. The vehicle has a chassis comprising two chassis parts, each of which carries a row of bogies arranged one behind the other which can be adjusted transversely with respect to a vertical longitudinal center plane of the transport vehicle. According to the invention, a single longitudinally adjustable transverse tie bar is arranged between the two rows of bogies and connects the two bogies of the/a radial axle, the length of said transverse tie bar being adjustable by a value corresponding to the extent to which the width and track width are increased or decreased.

International patent application WO 2015/121291A1 disclosed a modular heavy goods vehicle comprising a left vehicle module and a differently designed right vehicle module, each of which includes a longitudinal frame part and at least two wheel subassemblies and two transverse frame modules which extend in the direction of the width of the vehicle and the free ends of which are releasably connected to the longitudinal frame parts, the length of the transverse frame modules being adjustable.

There is known from an Australian patent application AU2009200341A1 a trailer with at least one wheel provided on a first lateral side thereof and at least one wheel provided on a second lateral side thereof wherein the distance between the wheels, in a transverse direction of the trailer can be varied between a first smaller distance and a second greater distance, and wherein the trailer further comprises a lifting mechanism operable to lift part of the trailer body in order to reduce the weight of the trailer borne by the wheels.

There is known from international application WO2010/094935A1 a highway trailer of variable width. The transport set comprises a tractor coupled to load lifting apparatus in the form of a trailer. The trailer has a chassis that is capable of being extended laterally on each side of the trailer by equal amounts, substantially simultaneously by means of two lateral adjustment means in the form of oppositely acting (e.g. hydraulic) sets of piston and cylinder arrangements. Additionally the chassis can be extended. The trailer can be used to pick up a container in an unextended state and in an extended state.

There is known from American patent US6206126 B1 a carrier for lifting devices having variable width track comprising a base frame, a first wheel frame, a second wheel frame, at least four slide assemblies, at least two actuation devices, and at least four wheel assemblies. The first wheel frame is slidably attached to one side of the base frame with at least two of the slide assemblies. The second wheel frame is slidably attached to the other side of the base frame with at least two of the slide assemblies. At least one of the actuating devices moves the first wheel frame relative to the base frame. At least one of the actuating devices moves the second wheel frame relative to the base frame. At least two of the wheel assemblies are mounted to the first wheel frame and at least two of the wheel assemblies are mounted to the second wheel frame.

There is known from American patent US4,221,398 B1 a highway trailer of selectively variable width. The trailer has two side structures each having at least one longitudinal row of axles provided with ground contacting wheels, hydraulic cylinders enabling movement of the side structures between an outer position corresponding to maximum width and an inner position corresponding to minimum width. A hitching pole is rotably connected to a cross-beam slidably connecting the side structures and controls fluid steering cylinders located symmetrically each between the steering cross-beam and the hitching pole. One pair of auxiliary fluid jacks are connected each to a corresponding one of the steering jacks. Each auxiliary jack angularly moves a corresponding axle.

There is known from WO2015084172 (A1) a trailer for transporting an object such as a boat. The trailer is provided with a chassis supported by wheels and support elements for the transported object. The chassis comprises two substantially parallel longitudinal beams and at least one transverse beam connecting two longitudinal beams. The longitudinal beams are mounted slidably on the transverse beam. The chassis further comprises adjusting means for adjusting the position of the longitudinal beams along the transverse beam comprising one or more slidable parts configured in a way facilitating extension of the transverse beam, and further adjusting means for adjusting the position of slidable parts along the transverse beam.

European patent application EP2894082 (A1) discloses a load bed of a transport vehicle having a variable width which has an intermediate portion, which can be connected to a tractor by means of an attachment member and two side portions moveable from and to the intermediate portion, and each carrying a row of front trolleys and a row of rear trolleys rotational about respective fixed axles under the bias of a steering assembly. The steering assembly has a hydraulic control block and a mechanical transmission interposed between the attachment member and the hydraulic control block connected mechanically to the intermediate portion. Each of the side parts is provided with a hydraulic rotation block of the front trolleys and a second hydraulic rotation block of the rear trolleys, and a motion reversing device to steer the front trolleys in opposite sense with respect to the rear trolleys and carried by the respective side portion; variable configuration of hydraulic pipes extending between the intermediate portion and each of the side portions to hydraulically connect the hydraulic control blocks and the hydraulic actuating blocks , facilitating the displacement of the side portions with respect to the intermediate portion.

European patent application EP2090462 (A2) discloses a container chassis with adjustable length having a rear and a front wheel axle with associated wheels sets and a chassis frame. The rear crossbeam of the loading frame comprises on its two lateral outer regions a curvature which permits movement of the rear crossbeam above the wheel set of the rear wheel axle.

There is known from the description of trailers published in the international application WO 2010/094935A1 and Polish patent application P.384628 a structural element of trailers referred to as gooseneck, being a specific shape of a front part of the frame of a low bed trailer, which makes it possible to lower the level of the loading deck above axles. The gooseneck connects the main loading deck and the trailer's chassis with the road tractor.

There is also known from a Polish patent application PL384628 A1 a ramp usually attached to the rear of the trailer on both sides of the loading platform of a low bed trailer, being a single platform hung on special hooks and provided with a fluid jack which makes it possible to put the ramp in an unfolded or folded position wherein the ramp is raised at an angle close to the right angle relative to the surface of the trailer's loading deck.

The European patent application EP1 577 159 A1 relates to a trailer having pivoted axles and a central recess, which comprises a chassis and an undercarriage having one or more wheel lines , wherein each wheel line comprises at least two sets of wheels with pivoted axles placed on either side of the trailer, and wherein at the position of the undercarriage the chassis has a central recess running in longitudinal direction and open at the top, which recess extends in both longitudinal and height direction between the mutually opposite sets of wheels of one or more of the wheel lines.

The multiaxial trailer according to the invention comprises a telescopic front part, with the front section thereof terminated at the top in an extendible gooseneck and permanently fixed to an internal central supporting beam which operates telescopically inside the central external beam with ribs fixed transversally thereto, and wheel sets attached to the external beam or transversal ribs, and deck sections positioned symmetrically on both sides of the central telescopic beam. Deck sections are divided transversely symmetrically into at least two deck sections of the length of not less than the width of a single wheel set, with each one mounted slidably in a direction perpendicular to the trailer axle in at least two guiding means of deck section parts units built on transverse ribs, with every deck section unit provided with at least two actuation fluid jacks.

Preferably the hydraulic cylinders of each deck section unit of each deck section are fed by hydraulic flow dividers. This type of feed has a positive effect on a steady operation of deck sections during opening and closing which is connected with a different friction factor on each side of the section that may be influenced by the degree of dirtiness caused by its operation, varied amounts of grease and manufacturing accuracy.

Each of the deck section units of the trailer according to the invention is steered independently of the other sections thereof and its extension degree may be adjusted individually.

Guiding means of each deck section unit are provided with tightened blocks which additionally secure the sections against undesired drop-out if the hydraulic cylinder is damaged or under the influence of an external force.

The rear deck section unit of each deck section, slidable perpendicular to the longitudinal axis of the trailer, is provided with hooks to which a removable hydraulic ramp is attached. The mounting of ramps on the rear deck section units of each deck section ensures simultaneous extension of ramps and the extension of deck section units of each deck section. Such simultaneous extension of ramps depending on the width of deck sections is advantageous as it saves time and has a positive effect on the safety of ramp operation since it is not possible to load a vehicle or a wheeled or a tracked machine with a big transverse wheelbase if the ramps are not positioned correctly.

The trailer is extended mechanically with the use of the tractor in such a way that the deck section of the trailer supported on axles is blocked with a handbrake, the blocks of the extendible flat deck are released, the tractor moves forward or backward and extends or retracts the central internal beam into the fixed external beam.

The width of the trailer may be increased using a control device installed for this purpose or a remote control being an integrated part of the hydraulic axle steering system or a separate hydraulic system used only for extending deck sections and ramps.

When increasing the width of the trailer's deck according to the invention, it is preferred that first the front parts of both deck sections, closest to the gooseneck, are extended, with other sections left unextended or retracted when loading is finished. Such a procedure improves the turning radius of the trailer's rear part and as a result it swing out less.

The trailer according to the invention was presented in exemplary embodiments thereof with reference to the attached drawings in which:

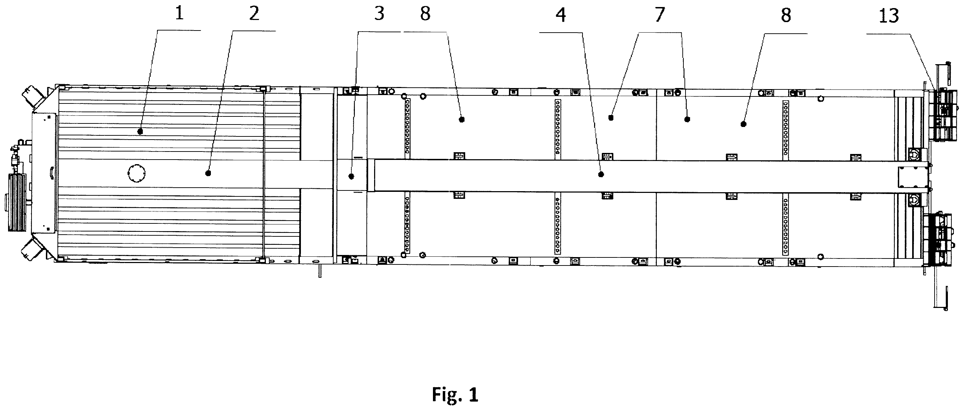

Fig. 1 shows the trailer in an unextended state, top view

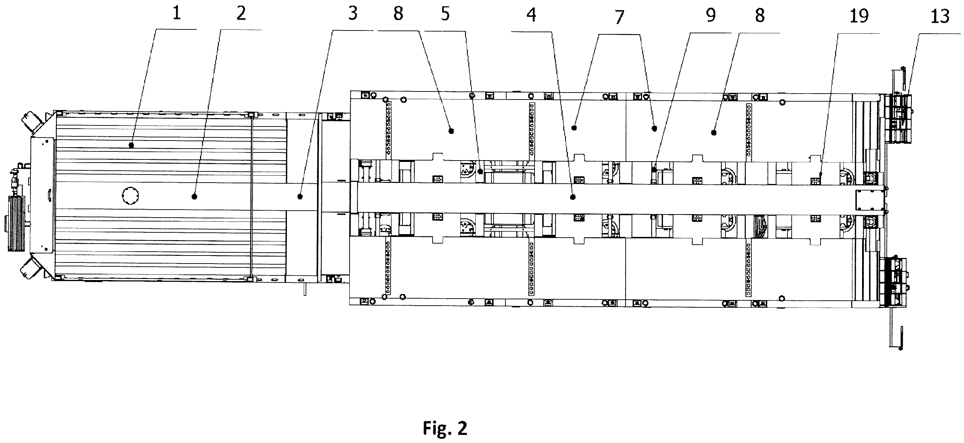

Fig. 2 shows the trailer in an extended state with all deck section units along the entire length extended, top view

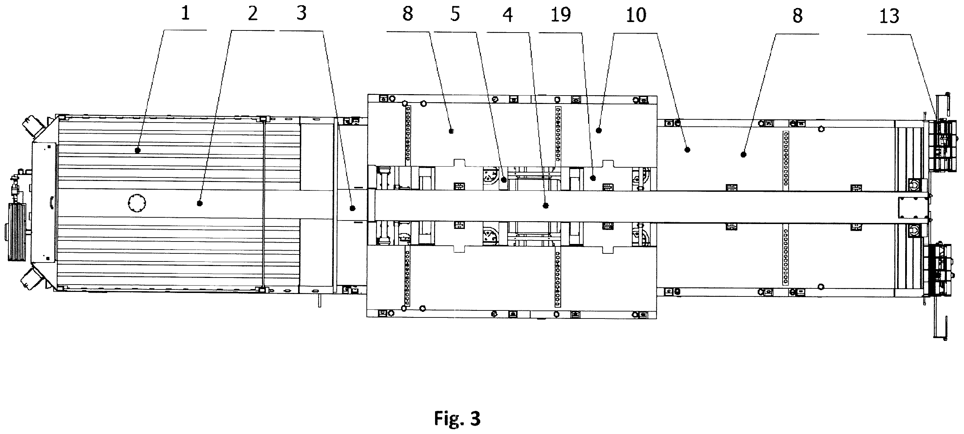

Fig. 3 shows the trailer with front deck section units extended, top view,

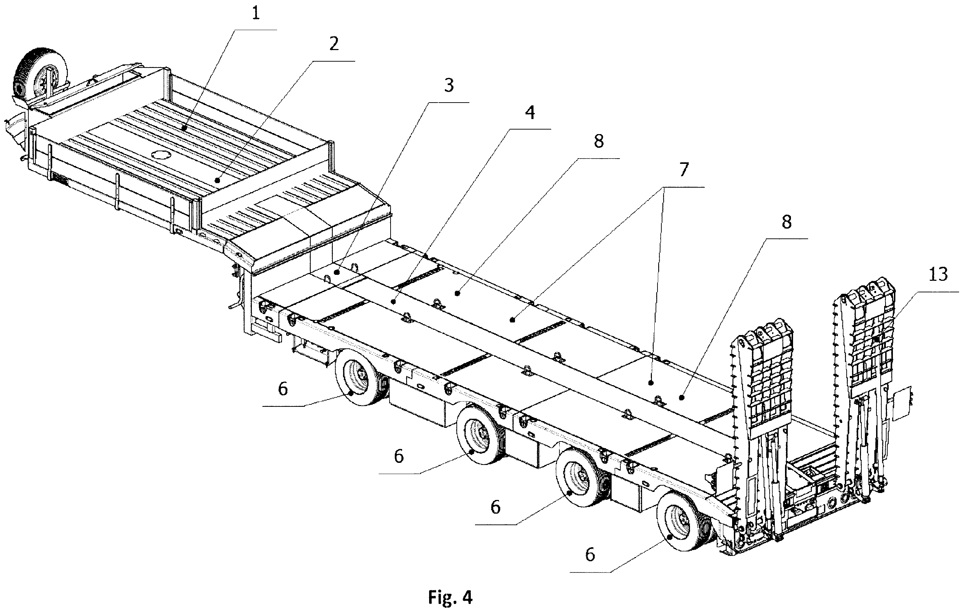

Fig. 4 shows the trailer in an unextended state, perspective view

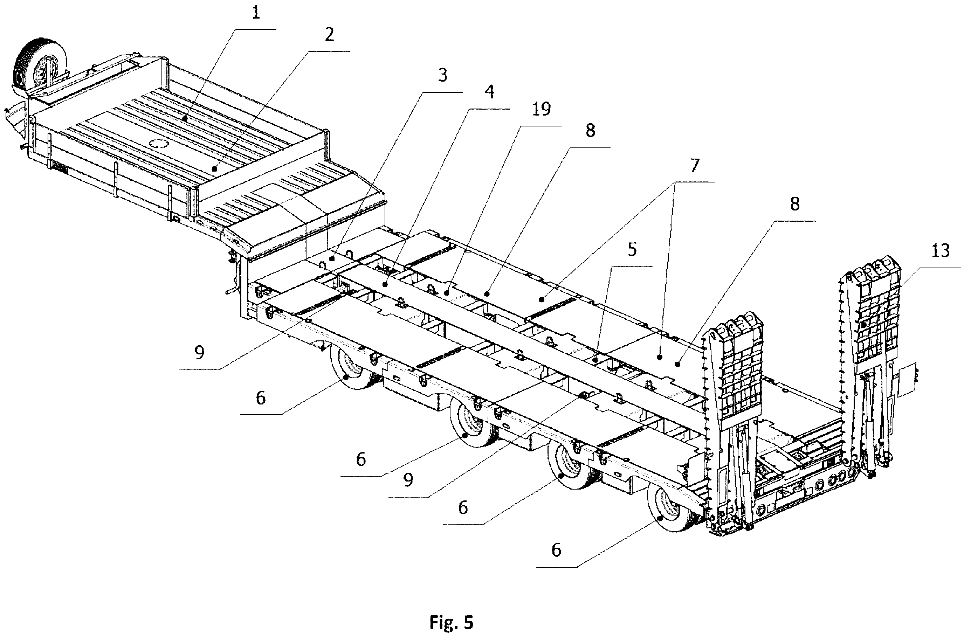

Fig. 5 shows the trailer in an extended state, perspective view, deck section units extended to the sides,

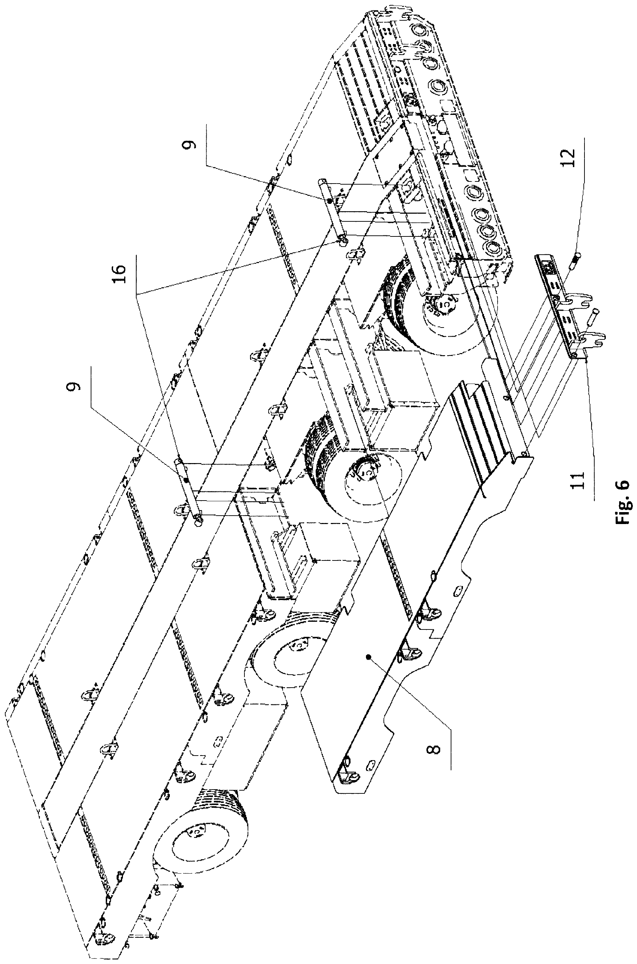

Fig. 6 is the perspective view of the rear part of the trailer, the rear slidable deck section unit of one of the deck sections removed and uncovered elements of the mounting and the drive of the deck section unit on a steel frame, and the ramp suspension, exploded view.
Fig. 7 a) shows a longitudinal section through a transverse rib with a telescopic arm of the deck section, whereas

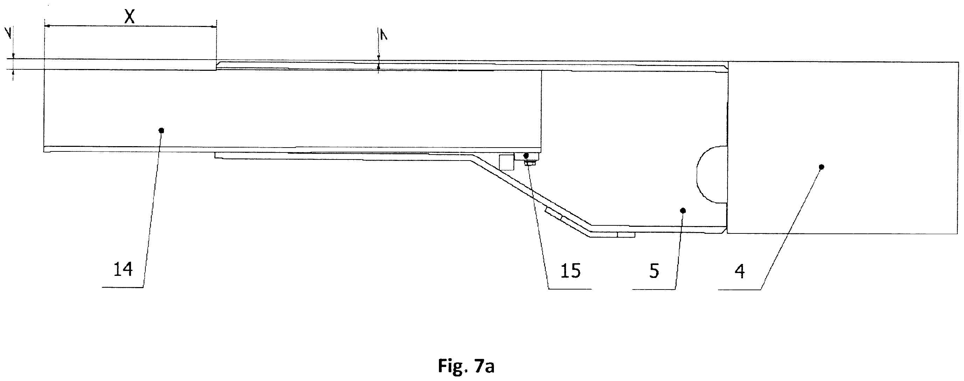

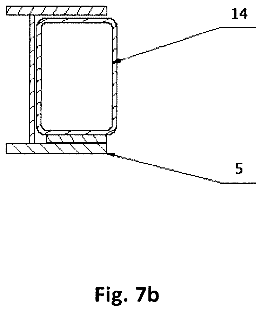

Fig. 7 b) shows a transverse section of a transverse rib;

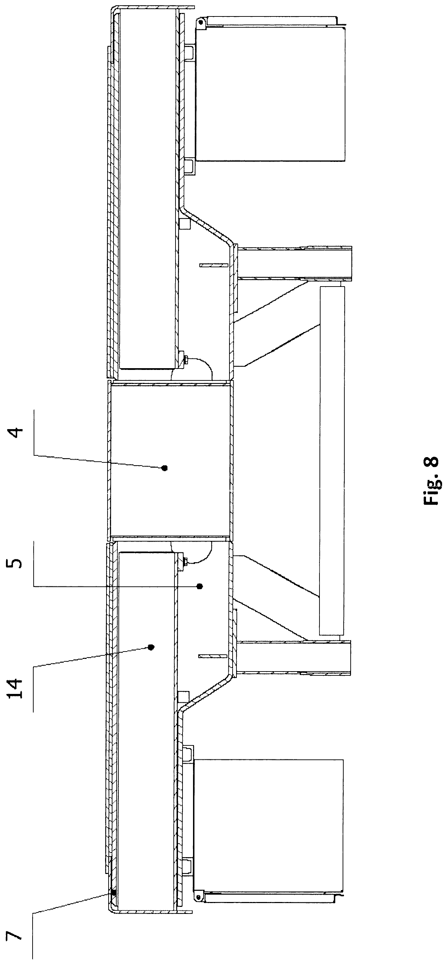

Fig. 8 shows a transverse section of the trailer in the place where transverse ribs are mounted,

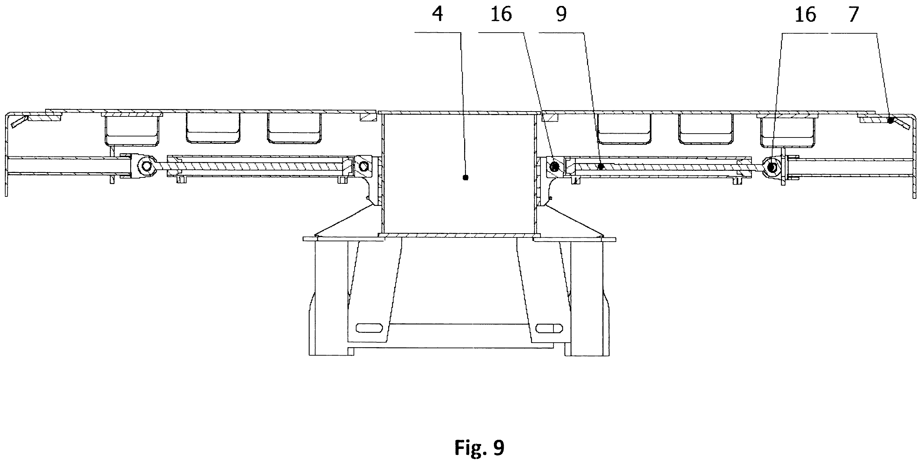

Fig. 9 shows transverse section of the trailer in the place where hydraulic cylinders are installed, with the jacks in an unextended state,

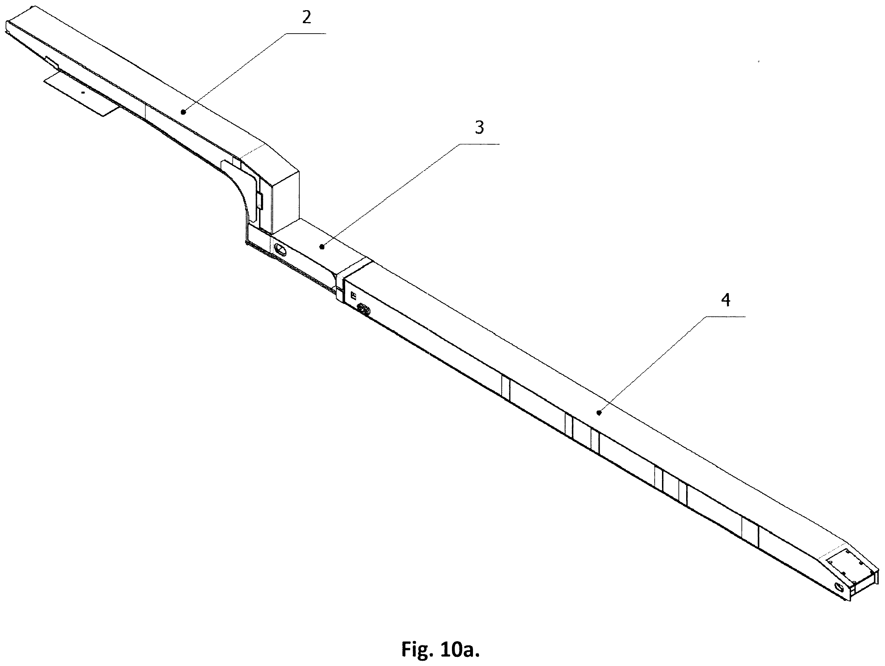

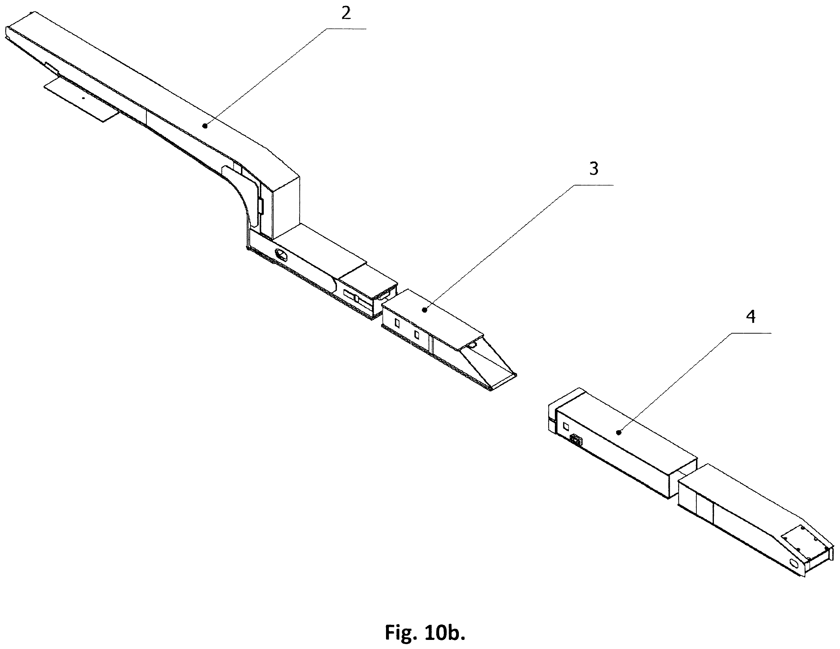

Fig. 10 a) is a perspective view of the trailer's telescopic longitudinal beam in an unextended state, whereas
Fig. 10 b) is a perspective view of the elements of the longitudinal telescopic beam, exploded view;

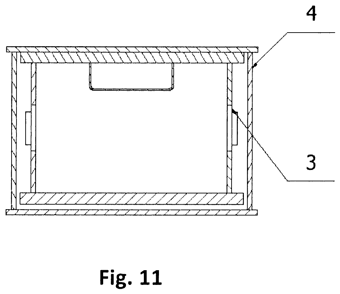

Fig. 11 shows a transverse section of the trailer's longitudinal beam, whereas

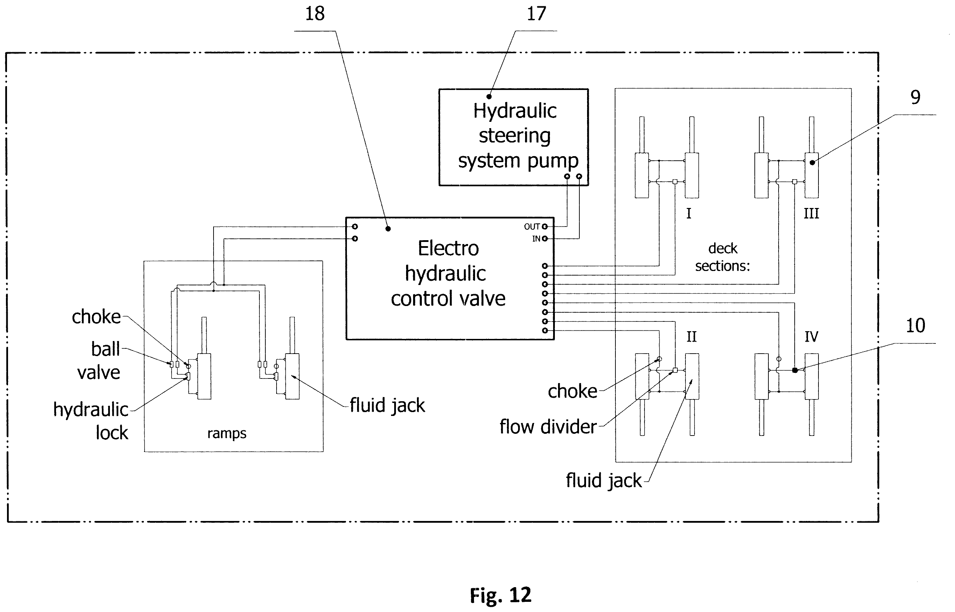

Fig. 12 shows the hydraulic diagram of the steering system for deck sections and ramps.

The multiaxial trailer according to the invention comprises a telescopic front part **1**, with the front part thereof terminated in an extendible gooseneck **2**, connected telescopically to the central internal telescopic beam **3**, on which the external central beam operates telescopically **4** and transverse ribs welded thereto **5**. The trailer is provided with wheel sets **6** mounted horizontally on the sides of the central beam **3**. The trailer according to the invention is provided with a transport deck comprising deck sections **7** positioned symmetrically on both sides of the central telescopic beam **4**. Each deck section **7** is divided transversally into two deck section units, symmetrically relative to the longitudinal vertical axis of the central beam into two deck units **8**, with each part attached slidably in a direction perpendicular to the trailer axis in guiding means of deck section units built on transverse ribs **5**, with every deck section unit **8** is provided with at least two driving hydraulic cylinders **9**.

The hydraulic cylinders **9** of each deck section unit **8** of each deck section **7** are fed by hydraulic flow dividers **10**.

Each of the deck section units **(8**) is steered independently of the other sections thereof and its extension degree may be adjusted individually.

The rear deck section unit **8** of each deck section **7** slidable perpendicularly relative to the longitudinal axis of the trailer is provided with hooks **11** on which a removable, extendible hydraulic ramp **13** provided with a hydraulic cylinder **9** is mounted with the use of pins **12**. The mounting of ramps **13** on rear deck section units **8** of each deck section **7** facilitates simultaneous extension of ramps **13** and extendible deck section units **8** of each deck section **7**.

Guiding means **14** of each deck section part **8** are provided with tightened blocks **15**, which additionally secure the sections against undesired drop-out if the hydraulic cylinder **9** is damaged or under an external force. Blocks **15** also relieve jacks **9**, when they are fully extended and take over the load created for example when negotiating a bend and when centrifugal force is applied to the slidable deck section units under load **8**. The hydraulic cylinders **9** are attached to cup-and-ball joints **16**, compensating deformations and non-linear operation of deck sections thus reducing stress.

In the basic embodiment of the invention the trailer's deck is divided into two opposite deck sections **7**, with each of said sections divided into two slidable deck section units **8** of similar length. In other embodiments of the invention the factor applied for the division of both deck sections **7** may be changed, however the length of each deck section unit **8** may not be less than the width of a single wheel set **6**.

The trailer in its basic version is provided with 4 wheel sets **6**. In other embodiments of the invention, the trailer may be provided with 2 up to 8 wheel sets **6**. In each case the number of hydraulically steered axles is such as to ensure the most optimum geometry of turning. The hydraulic steering system, if in place, also feeds all other additional functions installed on the trailer, in particular the hydraulic cylinders of deck section **7** units **8** and hydraulic cylinders **9** of ramps **13**.

Trailer according to the invention is coupled to the tractor by means of a gooseneck **2** and a pin. Units **8** of deck sections **7** may be extended or retracted at any time. When a deck section part has been extended **8**, a gap is created between the main external beam **4** and the extended part 8 of the deck section **7**. The extension of the rear parts **8** of deck sections **7** results in a simultaneous extension of ramps **13**. Slidable parts of **8** deck sections **7** mounted on guiding means **14** moving inside guiding means in transverse ribs **5**, facilitating efficient and smooth guiding of a slidable unit **8** of a deck section **7**. Transverse ribs **5** are welded into the external beam **4** convergently to the center at a small angle, adjusted so as to compensate partly for the deflection of **8** deck section units **7**, caused by the vertical clearance needed for the correct operation of the section and a deflection caused by the loading of deck sections **7** in a extended state when the load force arm is the longest. In practice the angle is 0 to 0.5 degree. The number of transverse ribs **5** is selected in such a way as to secure a sufficient rigidity of deck sections **7** and the load capacity of the structure. An additional support for the slidable deck section units **8** are the wheel arches **19** welded to the external central beam **4** above each of the axles that provide support for loads located between transverse ribs **5**.

In another embodiment of the invention, extension arms **8** of deck section units **7** move on teflon plates screwed on to the deck section **7** from the bottom at the level of transverse ribs **5** and to the lateral ribs **5**, thus reducing friction between elements and damage to the varnish coating.

The hydraulic power unit feeding the slidable parts **8** of deck sections **7** and ramps **13**, is preferably provided with a hydraulic pump **17** in the hydraulic axle steering system which feeds the hydraulic divider **18**. If there is no hydraulic axle steering system, it is necessary to install a hydraulic pump **17** and connect it to the divider **18**. Regardless of the method of feeding the hydraulic functions of the trailer, the system is provided with a protection against pump activation **17** while driving caused by accidental activation of buttons on the remote control.

Multiaxial trailer according to the invention is intended for transporting loads of width exceeding the maximum permissible width for road vehicles i.e. 2550mm, in particular such that due to their nature require support along the width exceeding 2550mm - for example precast concrete units, construction and agricultural machines with a big track width. The trailer according to the invention guarantees stable position and protection of transported objects, whereas ramps **13** coupled with ending loading units of **8** loading sections **7** facilitate the operation of loading vehicle to be transported on the loading deck.

## Claims

1. Multiaxial heavy-duty trailer with its front part terminated on one side in an extendible gooseneck, supporting frame with a loading platform comprising two loading sections positioned symmetrically on both sides of the middle beam, folding ramps attached to the rear of each loading section provided with hydraulic cylinders, **characterized in that** it is provided with a telescopic central beam with its front part (**1**) terminated from the front in an extendible gooseneck (**2**) with a central telescopic beam welded thereto **(3**), which telescopically operates inside the central external beam (**4**), with ribs mounted transversely thereto **(5**), and is provided with wheel sets (**6**), attached to the external beam (**4**) or transverse ribs **(5**), and positioned symmetrically on both sides of the central telescopic beam (**4**) deck sections (**7**), divided transversely, symmetrically relative to each other, into at least two deck section units **(8**) of the length not less than the width of a single wheel set (**6**), each mounted slidably in a direction perpendicular to the axis of the trailer in at least two guiding means of deck section units **(8**) built on transverse ribs **(5**), with each deck section unit **(8**) provided with at least two actuation hydraulic cylinders (**9**).

2. The trailer as defined in claim 1, **characterized in that** guiding means (**14**) of each deck section unit (**8**) are provided with blocks (**15**).

3. The trailer as defined in claim 1, **characterized in that** the hydraulic cylinders (**9**) of each deck section unit **(8**) of each deck section (**7**) are mounted on cup-and-ball joints (**16**).

4. The trailer as defined in claim 1, **characterized in that** the hydraulic cylinders (**9**) of each deck section unit (**8**) of each deck section (**7**) are fed by means of flow dividers (**10**).

5. The trailer as defined in claim 1, **characterized in that** each deck section unit (**8**) is steered independently of other sections thereof and its extension degree may be adjusted individually.

6. The trailer as defined in claim 1, **characterized in that** the rear deck section unit (**8**) of each deck section (**7**) slidable perpendicularly relative to the longitudinal axis of the trailer is provided with hooks (**11**), on which a removable, extendible hydraulic ramp **(13**), provided with a telescopic arm, is suspended.

## Patentansprüche

1. Mehrachsauflieger mit einem von einer Seite einen Schwanenhals aufweisenden Vorderbau, einem Tragrahmen mit einer Ladefläche, die aus zwei symmetrisch auf beiden Seiten des Mittelbalkens angeordneten Ladesektionen besteht, klappbaren und mit Hydraulikzylinder ausgestatteten Auffahrrampen, die hinter jeder Ladesektion angeordnet sind, **dadurch gekennzeichnet, dass** er einen zentralen zusammenschiebbaren Balken besitzt, dessen Vorderbau (**1**) vorne einen ausschiebbaren Schwanenhals (**2**) aufweist, an dem ein innerer zentraler Teleskopbalken (**3**) angeschweißt ist, der im zentralen Außenbalken (**4**) arbeitet, an dem die Querrippen **(****5**) befestigt sind, und Radsätze (**6**) besitzt, die am Außenbalken (**4**) oder an den Querrippen (**5**) befestigt sind, und symmetrisch auf beiden Seiten des zentralen Teleskopbalken (**4**) angeordnete Ladesektionen (**7**), die quer und gegeneinander symmetrisch auf mindestens zwei Segmente **(8**) mit Länge, die nicht kürzer als die Aufbaubreite des einzelnen Radsatzes ist, aufgeteilt sind und jedes dieser Segmente schiebbar und senkrecht zur Längsachse des Aufliegers in mindestens zwei auf den Querrippen (5) angeordneten Führungen von Segmenten **(8**) eingesetzt ist, wobei jedes Segment **(8**) mit mindestens zwei Antriebshydraulikzylinder (**9**) ausgestattet ist.

2. Auflieger nach Anspruch 1, **dadurch gekennzeichnet, dass** die Führungen (**14**) jedes einzelnen Segments (**8**) Blockierungen (**15**) aufweisen.

3. Auflieger nach Anspruch 1, **dadurch gekennzeichnet, dass** Hydraulikzylinder **(9**) jedes einzelnen Segments **(8**) jeder Ladesektion **(7**) in Kugelgelenken **(16)** eingesetzt sind.

4. Auflieger nach Anspruch 1, **dadurch gekennzeichnet, dass** Hydraulikzylinder **(9**) jedes einzelnen Segments (**8**) jeder Ladesektion **(7)** mittels Stromregelventile **(10**) beaufschlagt werden.

5. Auflieger nach Anspruch 1, **dadurch gekennzeichnet, dass** jeder der Segmente (**8**) unabhängig von anderen Segmenten gesteuert ist, damit können die Segmente individuell eingestellt werden.

6. Auflieger nach Anspruch 1, **dadurch gekennzeichnet, dass** das hintere und senkrecht zur Längsachse des Aufliegers schiebbare Segment **(8**) jeder Ladesektion (**7**) Haken (**11**) besitzt, auf denen eine abnehm- und klappbare, mit einem Teleskoparm ausgestattete hydraulische Auffahrrampe (**13**) aufgehängt ist.

## Revendications

1. Une semi-remorque à poids lourd à essieux multiples avec une structure frontale ayant à l'extrémité un col de cygne sur un côté, un châssis porteur avec un plateau de chargement consistant en deux sections de charge symétriquement situées de part et d'autre de la poutre centrale, des rampes de chargement rabattables fixées à l'arrière de chaque section de charge équipées de vérins hydrauliques, **caractérisée en ce qu'**elle a une poutre centrale pliée de manière télescopique qui a une structure frontale (**1**) ayant à l'extrémité un col de cygne coulissant au front (**2**) avec une poutre télescopique centrale interne soudée à celle-ci (**3**), qui fonctionne de manière télescopique à l'intérieur d'une poutre externe central (**4**), à laquelle les côtes sont attachées transversalement (**5**), et elle a des essieux **(6)**, attachés à la poutre extérieure (**4**) ou aux côtes transversales (**5**), et des sections de pont (**7**) disposés symétriquement des deux côtés de la poutre télescopique centrale (**4**) qui sont divisées transversalement, symétriquement l'un de l'autre, en au moins deux sections de pont **(8**) avec une longueur au moins égale à la largeur de la structure d'un essieu simple (**6**), dont chacun est placé de manière glissant dans une direction perpendiculaire à l'essieu de la semi-remorque dans au moins deux glissières de segments de pont **(8**) construit sur des côtes transversales **(5**), avec chaque segment de pont **(8**) équipé d'au moins deux vérins hydrauliques d'entraînement **(9)**.

2. Une semi-remorque selon la revendication 1, **caractérisée en ce que** les glissières (**14**) de chaque segment de pont (**8**) sont équipées de dispositifs de verrouillage (**15**).

3. Une semi-remorque selon la revendication 1, **caractérisée en ce que** les vérins hydrauliques (**9**) de chaque segment de pont **(8**) de chaque section de pont (**7**) sont intégrés dans des joints à rotule (**16**).

4. Une semi-remorque selon la revendication 1, **caractérisée en ce que** les vérins hydrauliques **(9**) de chaque segment de pont **(8**) de chaque section de pont (**7**) sont alimentés par des diviseurs de flux **(10**).

5. Une semi-remorque selon la revendication 1, **caractérisée en ce que** chaque segment de pont **(8**) est contrôlé indépendamment des autres et a la possibilité de régler individuellement le niveau d'extension.

6. Une semi-remorque selon la revendication 1, **caractérisée en ce que** le segment do pont **(8**) arrière coulissant perpendiculairement à l'axe longitudinal de la semi-remorque de chaque section de pont (**7**) a des crochets (**11**), sur lequel est suspendue une rampe hydraulique amovible et pliable (**13**) équipée d'un bras télescopique.
